# EUROPÄISCHE PATENTANMELDUNG

(11) **EP 4 746 266 A1**
(43) Veröffentlichungstag der Anmeldung: **20.05.2026**
(21) Anmeldenummer: 24213782.6
(22) Anmeldetag: 19.11.2024
(51) Int. Cl.: H02K 15/12, H02K 15/144, H02K 5/16

(54) **VERFAHREN ZUM VERGUSS EINER ANTRIEBSEINHEIT**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Koch, Thomas, 90459 Nürnberg (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner Patentanwälte mbB

(57) **Zusammenfassung**

Die Erfindung betrifft ein Verfahren zum Verguss einer Antriebseinheit (12), wenigstens aufweisend eine dynamoelektrische Maschine (11) mit einem Lagerschild (10) und einen wenigstens ein leistungselektronisches Element (13) aufweisenden Umrichter (14),
wobei der Umrichter (14) in das Lagerschild (10) integriert oder wenigstens teilintegriert ist, mit folgenden Schritten: Aufspannen des Lagerschilds (10) in axialer Richtung; Rotieren des Lagerschilds (10); Aufbringen eines Vergussmaterials (2) auf das Lagerschild (10); Aushärtung des Vergussmaterials (2).

## Beschreibung

Die Erfindung betrifft ein Verfahren zum Verguss einer Antriebseinheit.

Antriebe, bei welchem Umrichter in einen Motorinnenraum integriert sind, sind vorteilhaft. Hierbei ist der Umrichter z.B. im Gehäuse in axialer Richtung hinter dem Stator mit Wicklung montiert oder im Lagerschild intergiert. Auch eine kombinierte Lösung, umfassend Gehäuse und Lagerschild ist denkbar.

Durch die (Teil-)Integration des Umrichters in das Lagerschild werden vorzugsweise die Elemente der Leistungselektronik des Umrichters direkt in bzw. an das Lagerschild im Innenraum des Motors montiert. Hierbei ist die Fixierung und die Abfuhr der Wärme, welche im Betrieb durch die Leistungselektronik entsteht, besonders wichtig für das Betriebsverhalten des gesamten Antriebs.

Die Leistungsteile können z. B. mechanisch an einer Innenseite des Lagerschilds radial fixiert werden. Allerdings besteht die Gefahr, dass sich die fixierten Elemente durch z.B. Vibrationen wieder lösen. Auch der Schutz gegen Umwelteinflüsse, z.B. Feuchtigkeit durch Kondenswasser, fehlt. Zudem ist die Wärmeabfuhr durch beispielsweise Wärmeleitpasten zwischen Leistungsteil und Montagegeometrie des Lagerschildes nachteilig.

Der Erfindung liegt die Aufgabe zugrunde, dies zu verbessern.

Die Lösung der Aufgabe gelingt durch Anspruch 1, d. h. ein Verfahren zum Verguss einer Antriebseinheit, wenigstens aufweisend eine dynamoelektrische Maschine mit einem Lagerschild und einen wenigstens ein leistungselektronisches Element aufweisenden Umrichter, wobei der Umrichter in das Lagerschild integriert oder wenigstens teilintegriert ist, mit folgenden Schritten:
- Aufspannen des Lagerschilds in axialer Richtung,
- Rotieren des Lagerschilds,
- Aufbringen eines Vergussmaterials auf das Lagerschild,
- Aushärtung des Vergussmaterials.

Antriebe, bei welchem Umrichter in einen Motorinnenraum integriert sind, sind vorteilhaft und das beschriebene Verfahren eignet sich besonders gut. Der Umrichter ist z.B. im Gehäuse in axialer Richtung hinter dem Stator mit Wicklung montiert oder im Lagerschild intergiert.

Ein Vorteil gegenüber einer getrennten Aufstellung ist beispielsweise, dass keine externen Kabel zwischen Umrichter und Motor vorhanden sind, somit ergibt sich eine einfachere Inbetriebnahme und geringere Wicklungsbeanspruchung.

Ein Vorteil gegenüber aufgesetzten Umrichtern ist eine Beibehaltung des Lichtraumprofils, daher ist ein leichteres Retrofit möglich.

Von Vorteil ist zudem eine gezielte Abstimmung der beiden Komponenten und ein optimiertes Betriebsverhalten.

Das leistungselektronische Element ist vorteilhaft in und/oder an einer Innenseite des Lagerschilds mechanisch fixiert.

Das Vergussmaterial wird durch die Rotation vorteilhaft gleichmäßig verteilt.

Vorteilhaft ist eine Ausführungsform, wonach das Vergussmaterial epoxidbasiert ist. Epoxid-Vergussmassen sind in verschiedenen Ausführungen, beispielsweise 2-komponentig oder prozessoptimiert, verfügbar. Zudem ist eine gute thermische Stabilität gegeben.

Vorteilhaft ist eine Ausführungsform, wonach das Vergussmaterial eine Wärmeleitfähigkeit im Bereich von wenigstens 1 W/mK und höchstens 8 W/mK aufweist.

So gelingt die Wärmeabfuhr besonders gut.

Vorteilhaft ist eine Ausführungsform, wonach eine Verteilung des Vergussmaterials durch eine Einstellung der Vergussmaterialeigenschaften hinsichtlich Thixotropie und/oder Viskosität beeinflusst wird.

Die Verteilung des Vergussmaterials kann zusätzlich oder alternativ durch Vortemperierung des Lagerschilds beeinflusst werden.

Die Verteilung des Vergussmaterials kann zusätzlich oder alternativ durch Veränderung einer Rotationsgeschwindigkeit und/oder Drehrichtung beeinflusst werden.

Eine vorteilhafte Rotationsgeschwindigkeit liegt bei wenigstens fünf Umdrehungen pro Minute und höchstens 50 Umdrehungen pro Minute.

Die Verteilung des Vergussmaterials kann zusätzlich oder alternativ durch eine Veränderung eines Volumenstrom des Vergussmaterials beeinflusst werden.

Auf diese Weise kann das Material gut in die zu vergießenden Bereiche eingebacht werden und verteilt werden.

Vorteilhaft ist eine Ausführungsform, wonach das Vergussmaterial bei Umgebungstemperatur ausgehärtet wird und/oder durch Einbringen von Wärme ausgehärtet wird.

Eine thermische Aushärtung gelingt gut bei Temperaturen von wenigstens 100°C, besonders gut gelingt diese bei Temperaturen von wenigstens 120°C.

Zwischen 150 °C und 180°C, abhängig von den Materialeigenschaften bzw. den Empfehlungen des Herstellers in den Datenblättern, ist eine vorteilhafte maximale Temperatur zur Aushärtung.

Ebenso die Dauer. die kann von mehreren Stunden bis hinzu wenigen Minuten (bei 2K-Varianten) sein
Auch eine Aushärtung bei Umgebungstemperatur, insbesondere wenigstens 15°C und höchstens 25°C, ist möglich. Hierfür ist vorteilhaft ein längerer Aushärtezeitraum vorzusehen, beispielsweise wenigstens 20 h und höchstens 25 h. Ca. ein Tag für die Aushärtung kann hierbei angesetzt werden.

Vorteilhaft ist eine Ausführungsform, wonach das Lagerschild während der Aushärtung so lange rotiert wird, bis eine Gelierung des Vergussmaterials eintritt. Dies betrifft vorteilhaft sowohl die Aushärtung bei Umgebungstemperatur als auch die Aushärtung bei einem aktiven Wärmeeintrag.

Auf diese Weise können Lunker vermieden werden.

Vorteilhaft ist eine Ausführungsform, wonach das Vergussmaterial ein Vergussharz ist.

Vorteilhaft ist die Anwendung von Epoxidharz. Epoxidharz ist hart und zäh und weist beim Aushärten lediglich einen geringen Schrumpf auf. Ferner sind die mechanischen Eigenschaften von Epoxidharz von Vorteil. Epoxidharz weist zudem eine gute Beständigkeit gegenüber hohen Temperaturen auf.

Auch andere Vergussharze sind möglich.

Vorteilhaft ist eine Ausführungsform, wonach das Vergussmaterial ein Ein-Komponenten-Harzsystem ist oder ein Zwei-Komponenten-Harzsystem ist.

Beide Varianten sind in sehr vielen Modifikationen verfügbar. Ein 1K-Material ist leicht zu verarbeiten, benötigt aber mehr Energie und Zeit für die Aushärtung. Ein 2K-Material ist in der Verarbeitung dagegen aufwendiger, da die Mischung unmittelbar mit der Dosierung erfolgen muss.

Vorteilhaft ist eine Ausführungsform, wonach das Vergussmaterial mit wenigstens einer Dosierdüse auf das Lagerschild aufgebracht wird.

So können die richtigen Stellen zuverlässig vergossen werden.

Die Lösung der Aufgabe gelingt ferner durch eine Antriebseinheit, wenigstens aufweisend eine dynamoelektrische Maschine mit einem Lagerschild und einen wenigstens ein leistungselektronisches Element aufweisenden Umrichter, wobei der Umrichter in das Lagerschild integriert oder wenigstens teilintegriert ist, vergossen nach einem derartigen Verfahren.

Die Lösung der Aufgabe gelingt ferner durch eine Verwendung eines Vergussmaterials zum wenigstens teilweisen Verguss eines Lagerschilds, wobei das Lagerschild wenigstens ein leistungselektronisches Element aufweist.

Im Folgenden wird die Erfindung anhand der in den Figuren dargestellten Ausführungsbeispielen näher beschrieben und erläutert.

Es zeigen:
- FIG 1: ein Lagerschild,
- FIG 2: eine Antriebseinheit,
- FIG 3: Verfahrensschritte.

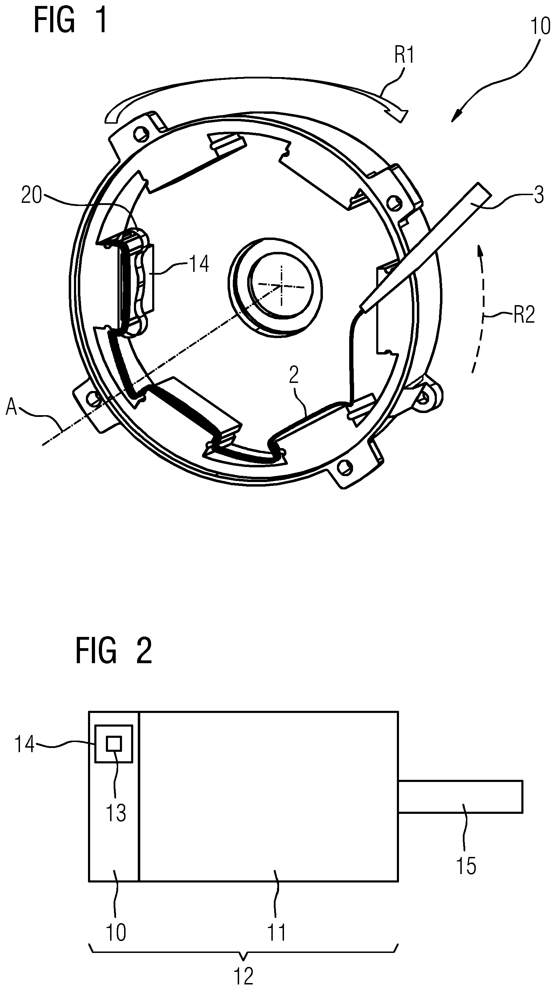

FIG 1 zeigt ein Lagerschild 10 einer dynamoelektrischen rotatorischen Maschine.

Das Lagerschild wird vorteilhaft um eine Rotationsachse A rotiert. Hierbei kann eine Rotationsrichtung R1 oder eine Rotationsrichtung R2 gewählt werden. Es ist auch möglich, abwechselnd, beispielsweise erst in die eine Rotationsrichtung R1 und dann in andere Rotationsrichtung R2, zu rotieren. Durch eine Düse 3 wird in FIG 1 Vergussmaterial 2 eingebracht.

Der Umrichter 14 ist, siehe auch FIG 2, in das Lagerschild 10 intergiert oder teilintegriert.

Durch die Erfindung ist es möglich, einen Vollverguss zu erlangen, bei welchem weder ausformende Vergusswerkzeuge noch im Produkt eingebrachte Elemente, z. B. Ring als Gießsperre oder Kunststoffkappe, nötig sind. Der Verguss gelingt ohne diese Elemente und ohne Vergusswerkzeuge.

Die Elemente der Teile der Leistungselektronik sind an der Innenseite des Lagerschilds 10 angeordnet und vorteilhaft mechanisch fixiert, siehe Fixierung 20.

Um nun eine endgültige Fixierung, Wärmeabfuhr und Schutz gegen Umwelteinflüsse zu erhalten, werden die Bereiche mit einem, vorzugsweise wärmeleitfähigen, Vergussmaterial umschlossen. Vorteilhaft sind hierbei Harze, z.B. auf Basis von Epoxid, 1K-Harzsysteme oder 2K-Harzsysteme (K steht hierbei für Komponenten). Es können aber auch Vergussmaterialien aus anderen Werkstoffen eingesetzt werden.

Die Wärmeleitfähigkeit des eingesetzten Vergussmaterials 2 bewegt sich vorteilhaft im Bereich von 1 W/mK bis hin zu 8 W/mK.

Für den Verguss wird das bestückte Lagerschild 10 axial aufgespannt und in Rotation gebracht.

Das Vergussmaterial 2 wird vorteilhaft über Dosiereinheiten (sog. Düsen 3) auf den rotierenden Innenbereich des Lagerschildes 10 mit der Leistungselektronik aufgebraucht. Das Material trifft auf die Leistungselektronik und den Lagerschild-Innenraum und verteilt sich durch die Rotation gleichmäßig in den zu vergießen Bereichen.

Durch die Einstellung der Materialeigenschaften (insbesondere hinsichtlich Thixotropie und/oder Viskosität), Vortemperierung des Bauteils (insbesondere des Lagerschilds), Rotationsgeschwindigkeit, Drehrichtung und/oder Volumenstrom des Vergussmaterials 2 kann die Verteilung des Vergussmaterials 2 gesteuert werden.

Anschließend erfolgt eine Aushärtung, vorteilhaft bei über 120 °C über mehrere Stunden hinweg. Insbesondere bei zweikomponentigen Harzsystemen eignet sich eine Aushärtung bei Umgebungtemperatur. Die Aushärtung dauert ca. 24 h.

Die Aushärtung erfolgt vorteilhaft in rotierender Bewegung, bis eine Gelierung des Vergussmaterials 2, insbesondere des Harzes, eingetreten ist. Auch bei Umgebungstemperatur härtenden Materialien kann die Rotation nach Erreichen des Gelier-Punktes beendet werden.

Die Verwendung von Verguss-Werkzeugen ist nicht erforderlich.

Durch den Rotationsverguss kann ein lunkerfreier Verguss erreicht werden, da die Luft entweichen kann. Dies wirkt sich positiv auf die Wärmeleitfähigkeit und die mechanische Fixierung des Gesamtsystems aus.

Die Vorteile des beschriebenen Rotationsvergusses sind insbesondere: Der Entfall sämtlicher Vergusswerkzeuge oder für den Verguss erforderliche Elemente. Somit ergibt sich eine Kostenreduktion. Es ist ein lunkerfreies Vergießen möglich. Der Verguss kann automatisiert erfolgen. Designänderungen haben keinen oder nur geringen Einfluss auf den Verguss bzw. den Prozess. Ferner ist eine Qualitätssicherung durch vollständige Prozessüberwachung möglich.

FIG 2 zeigt eine Antriebseinheit 12, aufweisend eine dynamoelektrische rotatorische Maschine 11 mit einem Lagerschild 10 sowie einer Welle 15.

Ein Umrichter 14 mit wenigstens einem leistungselektronischen Element ist wenigstens teilweise in das Lagerschild 10 integriert.

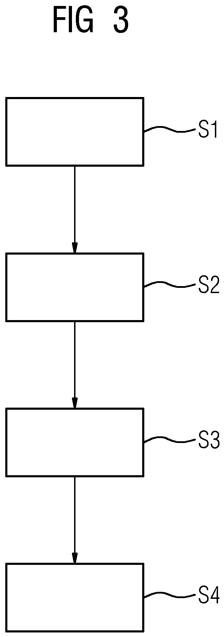

FIG 3 zeigt Verfahrensschritte.

In einem Verfahrensschritt S1 erfolgt ein Aufspannen des Lagerschilds in axialer Richtung.

In einem Verfahrensschritt S2 erfolgt ein Rotieren des Lagerschilds.

In eine Verfahrensschritt S3 erfolgt ein Aufbringen eines Vergussmaterials auf das Lagerschild.

In einem Verfahrensschritt S4 erfolgt eine Aushärtung des Vergussmaterials.

## Patentansprüche

1. Verfahren zum Verguss einer Antriebseinheit (12), wenigstens aufweisend eine dynamoelektrische Maschine (11) mit einem Lagerschild (10) und einen wenigstens ein leistungselektronisches Element (13) aufweisenden Umrichter (14),
wobei der Umrichter (14) in das Lagerschild (10) integriert oder wenigstens teilintegriert ist, mit folgenden Schritten:
- Aufspannen des Lagerschilds (10) in axialer Richtung,
- Rotieren des Lagerschilds (10),
- Aufbringen eines Vergussmaterials (2) auf das Lagerschild (10),
- Aushärtung des Vergussmaterials (2).

2. Verfahren nach Anspruch 1, wobei das Vergussmaterial (2) epoxidbasiert ist.

3. Verfahren nach einem der vorhergehenden Ansprüche, wobei das Vergussmaterial (2) eine Wärmeleitfähigkeit im Bereich von wenigstens 1 W/mK und höchstens 8 W/mK aufweist.

4. Verfahren nach einem der vorhergehenden Ansprüche, wobei eine Verteilung des Vergussmaterials (2) durch eine Einstellung der Vergussmaterialeigenschaften hinsichtlich Thixotropie und/oder Viskosität beeinflusst wird.

5. Verfahren nach einem der vorhergehenden Ansprüche, wobei eine Verteilung des Vergussmaterials (2) durch Vortemperierung des Lagerschilds (10) beeinflusst wird.

6. Verfahren nach einem der vorhergehenden Ansprüche, wobei eine Verteilung des Vergussmaterials (2) durch Veränderung einer Rotationsgeschwindigkeit und/oder Drehrichtung (R1, R2) beeinflusst wird.

7. Verfahren nach einem der vorhergehenden Ansprüche, wobei eine Verteilung des Vergussmaterials (2) durch eine Veränderung eines Volumenstrom des Vergussmaterials (2) beeinflusst wird.

8. Verfahren nach einem der vorhergehenden Ansprüche, wobei das Vergussmaterial (2) bei Umgebungstemperatur ausgehärtet wird und/oder durch Einbringen von Wärme ausgehärtet wird.

9. Verfahren nach einem der vorhergehenden Ansprüche, wobei das Lagerschild (10) während der Aushärtung so lange rotiert wird, bis eine Gelierung des Vergussmaterials (2) eintritt.

10. Verfahren nach einem der vorhergehenden Ansprüche, wobei das Vergussmaterial (2) ein Vergussharz ist.

11. Verfahren nach einem der vorhergehenden Ansprüche, wobei das Vergussmaterial (2) ein Ein-Komponenten-Harzsystem ist oder ein Zwei-Komponenten-Harzsystem ist.

12. Verfahren nach einem der vorhergehenden Ansprüche, wobei das Vergussmaterial (2) mit wenigstens einer Düse (3) auf das Lagerschild (10) aufgebracht wird.

13. Verfahren nach einem der vorhergehenden Ansprüche, wobei das leistungselektronische Element (13) in und/oder an einer Innenseite des Lagerschilds (10) mechanisch fixiert ist.

14. Antriebseinheit (12), wenigstens aufweisend eine dynamoelektrische Maschine (11) mit einem Lagerschild (10) und einen wenigstens ein leistungselektronisches Element (13) aufweisenden Umrichter (14), wobei der Umrichter (14) in das Lagerschild (10) integriert oder wenigstens teilintegriert ist, vergossen nach einem Verfahren nach einem der Ansprüche 1 bis 13.

15. Verwendung eines Vergussmaterials (2) zum wenigstens teilweisen Verguss eines Lagerschilds (10), wobei das Lagerschild (10) wenigstens ein leistungselektronisches Element (13) aufweist.
